# EUROPEAN PATENT APPLICATION

(11) **EP 2 941 982 A1**
(43) Date of publication of application: **11.11.2015**
(21) Application number: 15156318.6
(22) Date of filing: 24.02.2015
(51) Int. Cl.: A45B 25/30, A41D 3/04, A43B 23/02, A43B 7/12, A41D 13/01

(54) **Rain gear with light-reflective material and method for manufacturing the same**

(30) Priority: 08.05.2014 TW 103116399
(71) Applicant: Tsai, Cheng-Yi, Yilan County 261 (TW)
(72) Inventor: Tsai, Cheng-Yi, Yilan County 261 (TW)
(74) Representative: Zimmermann, Tankred Klaus

(57) **Abstract**

A method for manufacturing a rain gear (3) includes: forming a light-reflective unit (5) by attaching a hot-melt adhesive (52) to a light-reflective layer (51); providing a rainproof unit (4) made from a waterproof polymeric material; and bonding the light-reflective unit (5) to the rainproof unit (4) through the hot-melt adhesive (52) by hot melt or welding techniques. A rain gear (3) includes a waterproof polymeric material and at least one light-reflective unit (5) including a light-reflective layer (51) and a hot-melt adhesive (52). The hot-melt adhesive (52) partially diffused into the light-reflective layer (51) and the rainproof unit (4) so as to bond the rainproof unit (4) and the light-reflective layer (51).

## Description

The invention relates to a rain gear, more particularly to a rain gear with light-reflective material, and a method for manufacturing the rain gear.

Rain gears such as rain coats, umbrellas, rain boots, etc. are usually used in rainy weather conditions. Light-reflective elements are often attached to the rain gear by means of sewing techniques. Sewing techniques use threads that penetrate the light-reflective elements and the rain gear, thereby resulting in formation of tiny holes in the light-reflective elements and the rain gear. Consequently, rainwater may penetrate through the tiny holes.

Therefore, an object of the present invention is to provide a method for manufacturing a rain gear and a rain gear that can overcome the aforesaid drawback associated with the prior art.

According to a first aspect of the present invention, a method for manufacturing a rain gear includes : forming a light-reflective unit by attaching a hot-melt adhesive to a light-reflective layer; providing a rainproof unit made from a waterproof polymeric material that is weldable or heat-meltable; and bonding the light-reflective unit to the rainproof unit through the hot-melt adhesive by hot melt or welding techniques.

According to a second aspect of the present invention, a rain gear includes a rainproof unit made from a heat-meltable and waterproof polymeric material, and at least one light-reflective unit including a light-reflective layer and a hot-melt adhesive. The hot-melt adhesive is partially diffused into the light-reflective layer and the rainproof unit so as to bond the rainproof unit and the light-reflective layer.

Other features and advantages of the present invention will become apparent in the following detailed description of the embodiments with reference to the accompanying drawings, of which:
Figure 1 is a front view of a first embodiment of a rain gear with a plurality of light-reflective units according to the present invention;
Figure 2 is a rear view of the first embodiment;
Figure 3 illustrates a flow chart for manufacturing the first embodiment;
Figure 4 illustrates consecutive steps for bonding a light-reflective unit to a rainproof unit through a hot-melt adhesive;
Figure 5 is a front view of a second embodiment of the rain gear according to the present invention;
Figure 6 is a top view of the second embodiment, showing a plurality of light-reflective units attached to an edge of a canopy of a rainproof unit;
Figure 7 is a top view of a modification of the second embodiment, illustrating another arrangement of the light-reflective units; and
Figure 8 is a perspective view of a third embodiment of the rain gear according to the present invention.

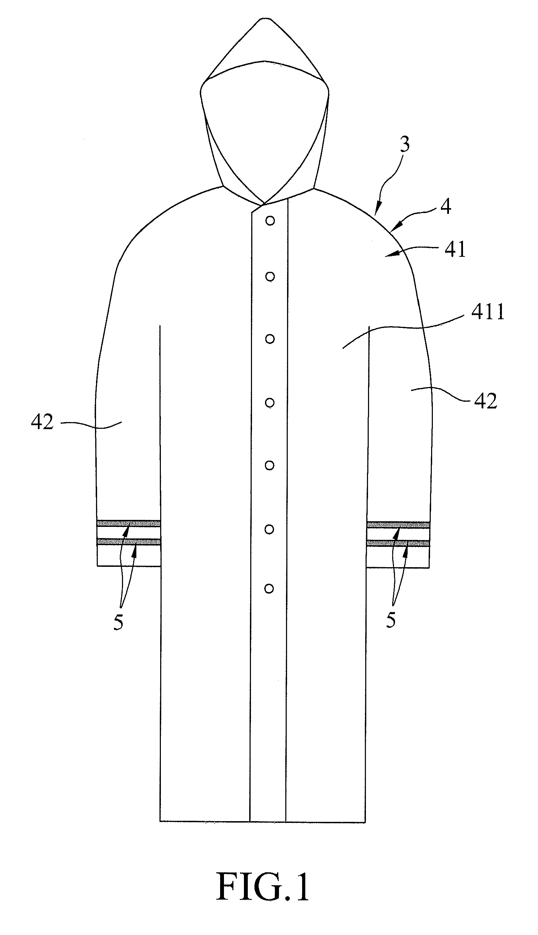

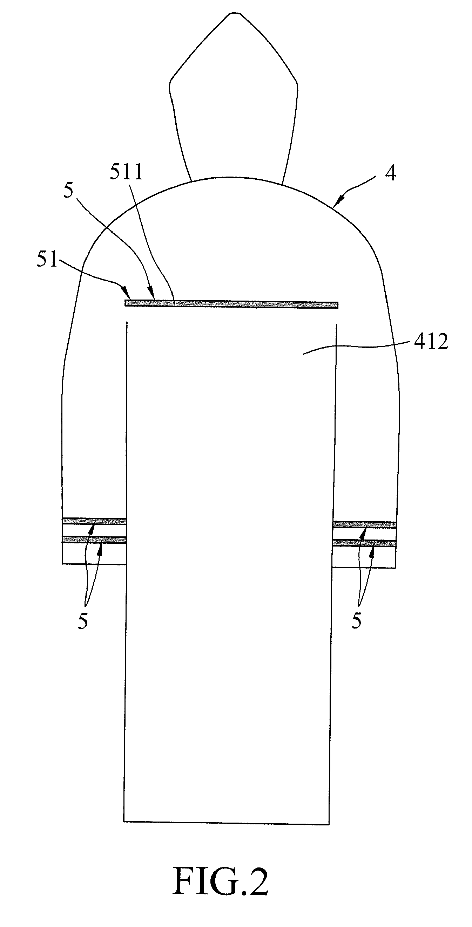

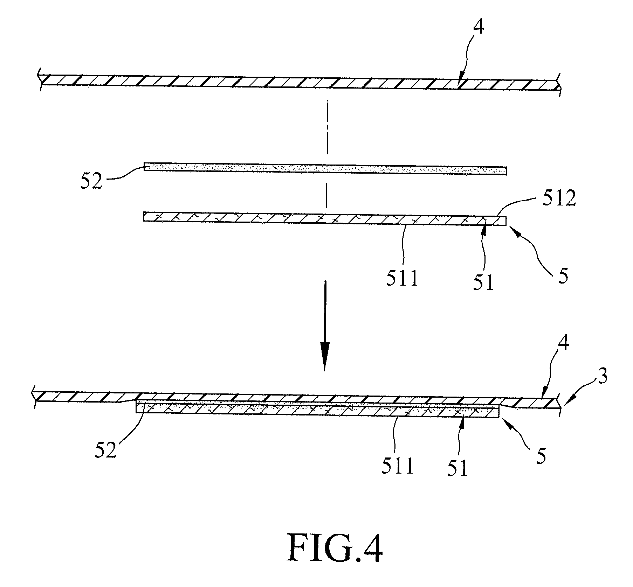

Figures 1, 2 and 4 illustrate a first embodiment of a rain gear 3 of the present invention. The rain gear 3 includes a rainproof unit 4 made from a waterproof polymeric material that is weldable or heat-meltable, and a plurality of light-reflective units 5 adhered to an outer surface of the rainproof unit 4. In this embodiment, the rainproof unit 4 is in the form of a rain coat having a torso portion 41 and two sleeve portions 42 connected to two opposite sides of the torso portion 41. In this embodiment, the waterproof polymeric material is made of a material selected from the group consisting of ethylene vinyl acetate (EVA), polyethylene vinyl acetate (PEVA), and the combination thereof, and the hot-melt adhesive is made of EVA. The torso portion 41 has a forepart 411 and a back part 412. As shown in Figure 4, each of the light-reflective units 5 includes a light-reflective layer 51 and a hot-melt adhesive 52. The light-reflective layer 51 is made of a fabric material and has a light-reflective front surface 511 and a back surface 512 on which the hot-melt adhesive 52 is adhered. The hot-melt adhesive 52 is partially diffused into the back surface 512 of the light-reflective layer 51 and the rainproof unit 4 so as to bond the light-reflective layer 51 and the rainproof unit 4. In the first embodiment, the light-reflective units 5 are attached to the back part 412 of the torso portion 41 and one end of each of the sleeve portions 42 adjacent to a cuff thereof. However, the number and position of the light-reflective units 5 could be altered according to practical requirements.

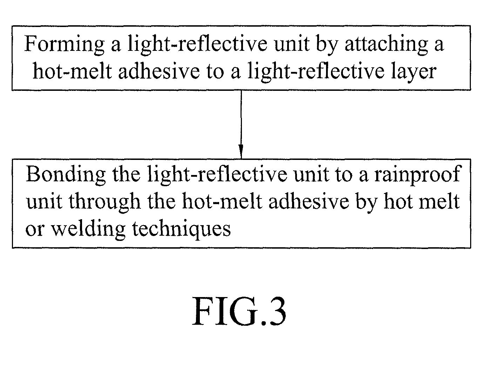

Figures 3 and 4 illustrate a method for manufacturing the rain gear 3 of this invention. In the method, the rainproof unit 4 made from the waterproof polymeric material that is weldable or heat-meltable is first provided. The light-reflective unit 5 is formed by attaching the hot-melt adhesive 52 to the back surface 512 of the light-reflective layer 51. The light-reflective unit 5 is bonded to the rainproof unit 4 through the hot-melt adhesive 52 by hot melt or welding techniques. In the bonding step, the hot-melt adhesive 52 diffuses into the rainproof unit 4 and the back surface 512 of the light-reflective layer 51 so as to bond the light-reflective unit 5 and the rainproof unit 4.

In this embodiment, the hot-melt adhesive 52 is in the form of a film. However, the hot-melt adhesive 52 may be a glue coated on the back surface 512 of the light-reflective layer 51. The glue can be made by mixing a two-component polyurethane adhesive, an EVA powder and a curing agent. Since the hot-melt adhesive 52 used in this embodiment is well-known in the art, it will not be elaborated herein for the sake of brevity.

The welding techniques may be ultrasonic welding, or high-frequency welding techniques.

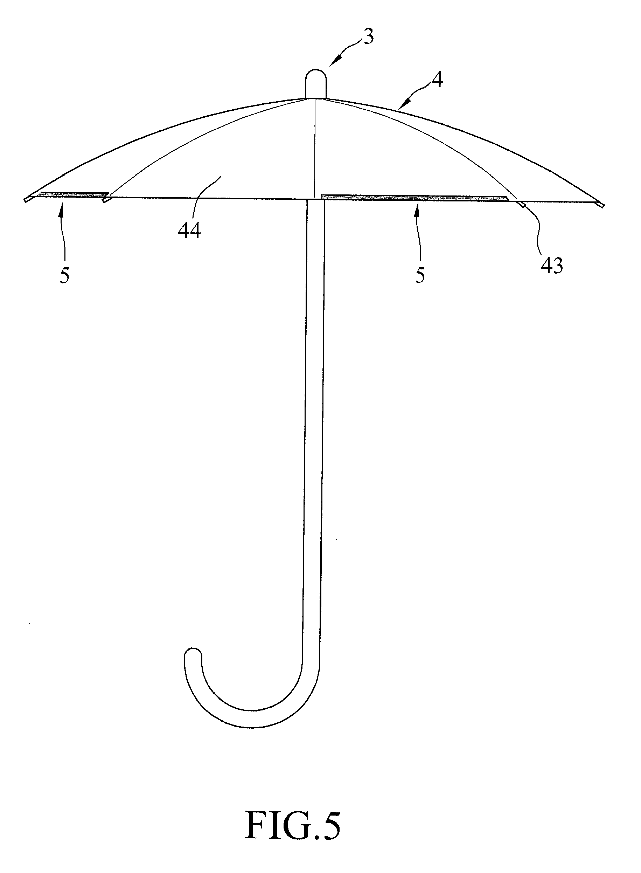

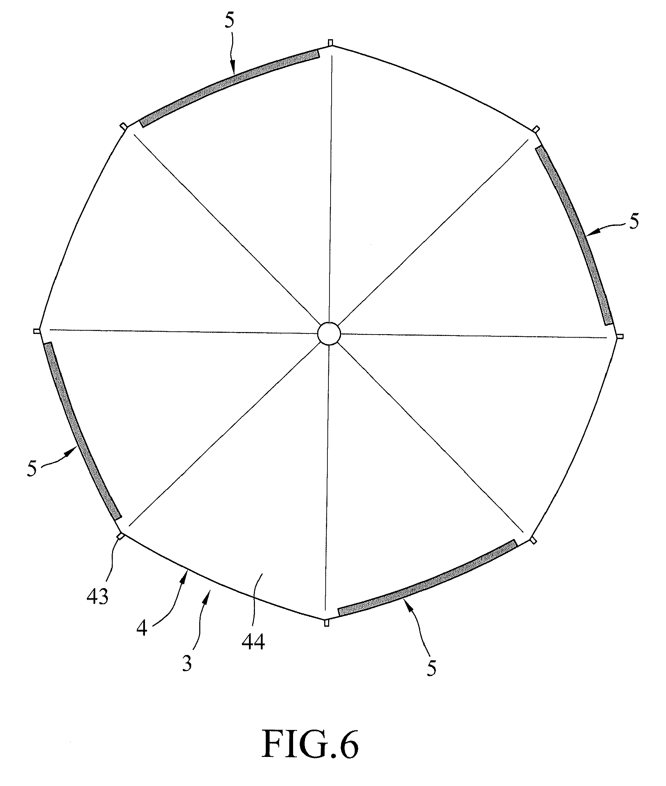

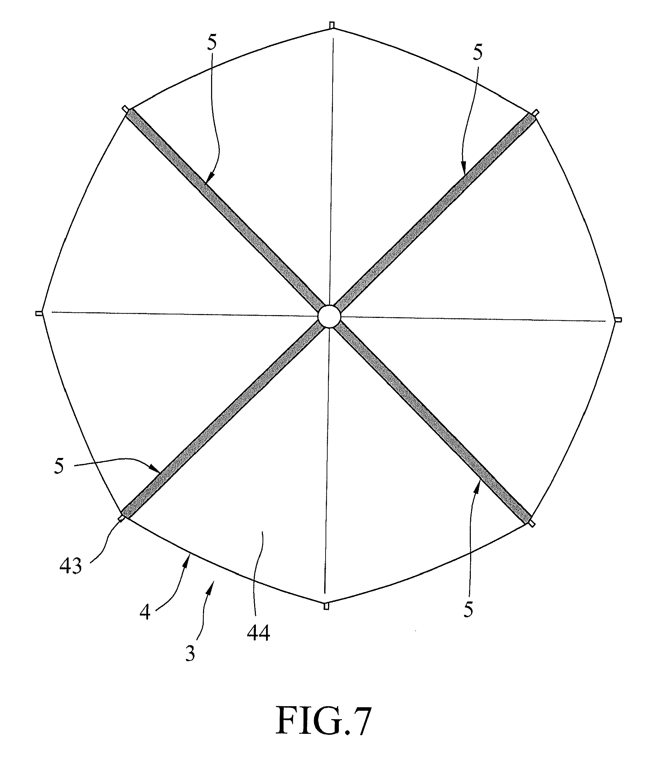

Figures 5 to 7 illustrate a second embodiment of the rain gear 3 of the present invention. The rain gear 3 includes the rainproof unit 4 and a plurality of the light-reflective units 5. The rainproof unit 4 is an umbrella having a support frame 43 and a canopy 44 connected to the support frame 43. The light-reflective units 5 are attached to an outer surface of the canopy 44 of the umbrella. In this embodiment, the light-reflective units 5 are attached to an edge of the outer surface of the canopy 44 (see Figure 6), or may be radially and angularly attached to the outer surface of the canopy 44 (see Figure 7) . The number and arrangement of the light-reflective units 5 could be altered according to practical requirements.

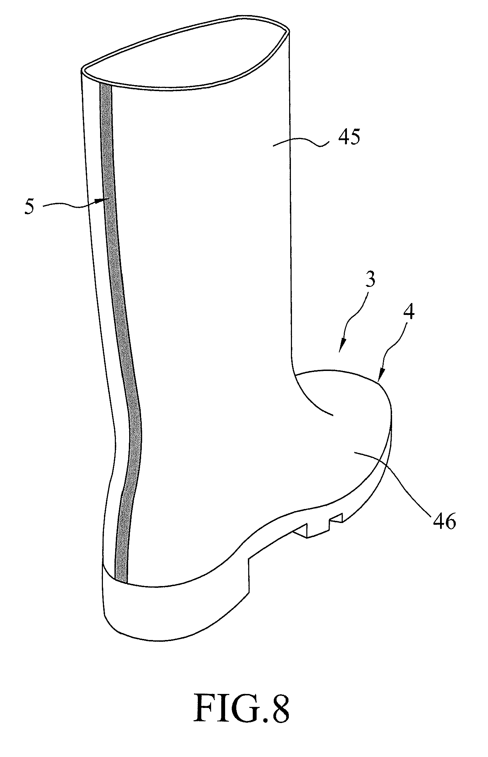

Figure 8 illustrates a third embodiment of the rain gear 3 of the present invention. The rain gear 3 includes the rainproof unit 4 and the light-reflective unit 5. The rainproof unit 4 is a rain boot having an upper 45 and a bootleg 46 affixed to the upper 45. The light-reflective unit 5 extends vertically and is attached to an outer surface of the bootleg 46 of the rain boot. Alternatively, the rain boot may include a plurality of light-reflective units 5 attached to both the upper 45 and the bootleg 46. The number and arrangement of the light-reflective units 5 could be altered according to practical requirements.

By using the hot-melt adhesive 52, the light-reflective unit 5 could be attached seamlessly and fixedly to the rainproof unit 4.

## Claims

1. A method for manufacturing a rain gear (3), comprising :
forming a light-reflective unit (5) by attaching a hot-melt adhesive (52) to a light-reflective layer (51);
providing a rainproof unit (4) made from a waterproof polymeric material that is weldable or heat-meltable; and
bonding the light-reflective unit (5) to the rainproof unit (4) through the hot-melt adhesive (52) by hot melt or welding techniques.

2. The method of Claim 1, wherein the hot-melt adhesive (52) is made of ethylene vinyl acetate (EVA).

3. The method as claimed in Claim 1 or 2, wherein the waterproof polymeric material is made of a material selected from the group consisting of ethylene vinyl acetate (EVA), polyethylene vinyl acetate (PEVA), and the combination thereof.

4. The method as claimed in Claim 1 or 2, wherein the light-reflective layer (51) includes a light-reflective front surface (511) and a back surface (512) on which the hot-melt adhesive (52) is adhered.

5. The method as claimed in Claim 1 or 2, wherein the light-reflective layer (51) is made of a fabric material and, in the bonding step, the hot-melt adhesive (52) diffuses into the rainproof unit (4) and the light-reflective layer (51) so as to bond the light-reflective unit (5) and the rainproof unit (4).

6. The method as claimed in Claim 1 or 2, wherein the hot-melt adhesive (52) is in the form of a film.

7. A rain gear (3), comprising:
a rainproof unit (4) made from a waterproof polymeric material that is weldable or heat-meltable; and
at least one light-reflective unit (5) that includes a light-reflective layer (51) and a hot-melt adhesive (52) partially diffused into said light-reflective layer (51) and said rainproof unit (4) so as to bond said rainproof unit (4) and said light-reflective layer (51).

8. The rain gear (3) of Claim 7, wherein said rainproof unit (4) has an outer surface, said light-reflective layer (51) having a light-reflective front surface (511) and a back surface (512) on which said hot-melt adhesive (52) is attached, said light-reflective layer (51) being adhered to said outer surface of said rainproof unit (4) through said hot-melt adhesive (52).

9. The rain gear (3) as claimed in Claim 7 or 8, wherein said rainproof unit (4) is a rain coat having a torso portion (41), and said light-reflective unit (5) is attached to said torso portion (41) of said rain coat.

10. Theraingear (3) ofClaim9, wherein said torso portion (41) has a forepart (411) and a back part (412), said light-reflective unit (5) being attached to said back part (412) of said torso portion (41).

11. The rain gear (3) as claimed in Claim 7 or 8, wherein said rainproof unit (4) is a rain coat having a torso portion (41) and two sleeve portions (42) connected to two opposite sides of said torso portion (41), said rain gear (3) including a plurality of said light-reflective units (5) attached to said torso portion (41) and said two sleeve portions (42).

12. The rain gear (3) of Claim 11, wherein said torso portion (41) has a forepart (411) and a back part (412), said light-reflective units (5) being attached to said back part (412) of said torso portion (41) and said two sleeve portions (42).

13. The rain gear (3) as claimed in Claim 7 or 8, wherein said rainproof unit (4) is an umbrella having a support frame and a canopy connected to said support frame, said light-reflective unit (5) being attached to said canopy of said umbrella.

14. The rain gear (3) as claimed in Claim 7 or 8, wherein said rainproof unit (4) is a rain boot having an upper (45) and a bootleg (46) affixed to said upper (45).

15. The rain gear (3) of Claim 14, wherein said light-reflective unit (5) is attached to said upper (45).

16. The rain gear (3) of Claim 14, wherein said light-reflective unit (5) is attached to said bootleg (46).

17. The rain gear (3) of Claim 14, comprising a plurality of said light-reflective units (5) attached to said upper (45) and said bootleg (46).
